# EUROPEAN PATENT APPLICATION

(11) **EP 0 905 949 A1**
(43) Date of publication of application: **31.03.1999**
(21) Application number: 97202945.8
(22) Date of filing: 26.09.1997
(51) Int. Cl.: H04L 29/06, H04J 3/16

(54) **Priority-scheduled parallel message delivery method and apparatus**

(71) Applicant: X-Way Rights B.V., 5503 LA Veldhoven (NL)
(72) Inventor: van der Heijden, Xander, 4661 TC Halsteren (NL); Deblier, Robert, 3500 Hasselt (BE)
(74) Representative: de Bruijn, Leendert C.

(57) **Abstract**

Method of and apparatuses for transmitting a plurality of messages (M1, ..., M7), of which at least some have different transmission priorities (P1, ..., P6), with a transmitter (TX) including a transmitter processor (TP), a transmitter memory (TM) and a transmitter buffer (TB) with transmitter buffer parts (TB1, ..., TB6) each being assigned to buffer message parts with a predetermined transmission priority, the method including the following steps:
a. reading out parts of the messages (M1, ..., M7) and buffering them into transmitter buffer parts such that any message with a predetermined transmission priority is buffered in a transmitter buffer part with equal transmission priority;
b. transmitting the parts of the messages (M1, ..., M7) from the transmitter buffer parts (TB1, ..., TB6) such that empty transmitter buffer parts or empty parts thereof are jumped over;
c. repeating steps a and b until each message has been transmitted.

The apparatus may be a transmitter, receiver or transceiver.

## Description

### Field of the invention

The present invention relates to the field of communicating messages with different priorities in electronic communication networks.

### Background of the invention

While designing a highly parallellized multithreaded message delivery system with messages of multiple priorities, the need arose for a solution to prioritize and schedule messages of multiple priorities sent from one computer or networked device to another across a variety of networks and utilizing a variety of network protocols, or even from multiple sources to one destination, and vice versa.

Existing solutions mostly sent one message or datafile at a time, as for instance in the SMTP (Simple Mail Transfer Protocol, described in Internet RFC 821) and the FTP (File Transfer Protocol, described in Internet RFC 959). When applying a simple, known prioritizing scheme to this technique, messages would be inserted into a list in the computer's memory, in sequence of priority such that high priority messages are transmitted first, then the ones with lower priority, etc.

However, this known technique has several disadvantages:
1. if there are no high priority messages to be transmitted, and a very large low priority message is being sent, a message with higher priority added to the list in the computer's memory, which needs to be transmitted, will have to wait until the entire transmission of the low priority message has been completed. This could take hours depending upon the speed of the network connection, e.g. an internet connection across a slow modem;
2. this technique offers an absolute preference to higher priority messages such that there is no guarantee about when a lower priority message will eventually be transmitted.

### Summary of the invention

The object of the invention is to provide a method and apparatus which avoid the disadvantages related to the prior art.

The object of the present invention is obtained with a method of transmitting a plurality of messages, of which at least some have different transmission priorities, between at least one transmitter and at least one receiver, the transmitter at least comprising a transmitter processor, a transmitter memory and a transmitter buffer, the transmitter buffer comprising a plurality of transmitter buffer parts each being assigned to buffer at least part of a message with a predetermined transmission priority, the method comprising the following steps:
a. subsequently reading out parts of the messages and subsequently buffering these parts into the transmitter buffer parts such that any message with a predetermined transmission priority is buffered in a transmitter buffer part having assigned to it an equal predetermined transmission priority;
b. subsequently reading out the transmitter buffer parts and transmitting the parts of the messages such that only valid message information is read out from the transmitter buffer parts and empty transmitter buffer parts or empty parts thereof are jumped over during the reading out;
c. repeating steps a and b until each message has been transmitted.

The method according to the invention has been developed starting from the following assumptions:
1. network connections to and from several destinations may and will be open simultaneously, and all these will together compete for system resources (computer CPU time, network bandwidth, i/o to and from disc, etc.);
2. even lower priority messages should be able to get their share of system resources;
3. higher priority messages tend to be smaller and very large messages should be given lower priorities.

The method according to the invention follows simple rules. While the method does not offer the perfect solution, in the sense that messages with the highest priority should interrupt any other message and should then be transmitted entirely as fast as possible, it is a compromise which shows to be fast and flexible. According to tests it does a surprisingly good job of priority scheduling.

In the method according to the invention, the messages are not transmitted in a one-message-at-a-time way. All messages waiting to be transmitted are sliced up in little parts or packets, which parts or packets are transmitted in accordance with prioritizing rules. One advantage of the method as claimed is that, in order to implement it, only the slicing of the messages has to be added to available network software, as will be explained hereinbelow.

Preferably, the higher the transmission priority of the message to be transmitted, the larger the part of the message buffered in the corresponding transmitter buffer part is. Such a construction of the transmitter buffer parts ensures that the higher the transmission priority of a message, the higher the speed is with which it is transmitted.

In such a preferred embodiment, the size of the part of a message having a predetermined transmission priority and being buffered in a corresponding transmitting buffer part may be twice as large as the size of the part of another message having one lower level of transmission priority and being buffered in another corresponding transmitter buffer part. Then, in one cycle, a message with a certain transmission priority can theoretically pass twice as much data as the next lower priority.

It is to be noted that although the present invention starts with the principle of slicing up waiting messages in little parts, of course, sometimes slicing up means that an entire message can be buffered in a corresponding transmitter buffer part, i.e. when the size of the transmitter buffer part is such that it can buffer the entire message. It is to be understood that this option is expressly part of the present invention.

The present invention also relates to a transmitter comprising a transmitter processor, a transmitter memory controlled by the transmitter processor and for storing a plurality of messages, of which at least some have different transmission priorities, and a transmitter buffer controlled by the transmitter processor, the transmitter buffer comprising a plurality of transmitter buffer parts each being assigned to buffer at least part of a message with a predetermined transmission priority, the transmitter processor being arranged for:
a. subsequently reading out parts of the messages from the transmitter memory and subsequently buffering these parts into the transmitter buffer parts such that any message with a predetermined transmission priority is buffered in a transmitter buffer part having assigned to it an equal predetermined transmission priority;
b. subsequently reading out the transmitter buffer parts and transmitting the parts of the messages such that only valid message information is read out from the transmitter buffer parts and empty transmitter buffer parts or empty parts thereof are jumped over during the reading out;
c. repeating steps a and b until each message has been transmitted.

In such a transmitter, the transmitter buffer part may be sized such that the higher the transmission priority is, the larger the corresponding transmitter buffer part is.

The present invention also relates to a system provided with at least one transmitter as defined above and with at least one receiver comprising a receiver processor, a receiver memory controlled by the receiver processor and for storing a plurality of messages, of which at least some have different transmission priorities, and a receiver buffer controlled by the receiver processor, the receiver buffer comprising a plurality of receiver buffer parts, at least as many as there are transmitter buffer parts and each being assigned to buffer at least part of a message with a predetermined transmission priority, the receiver processor being arranged for:
a. subsequently receiving parts of the messages from the transmitter and subsequently buffering these parts into the receiver buffer parts such that any message with a predetermined transmission priority is buffered in a receiver buffer part having assigned to it an equal predetermined transmission priority;
b. subsequently reading out the receiver buffer parts and storing the parts of the messages into the receiver memory such that only valid message information is read out from the receiver buffer parts and empty receiver buffer parts or empty parts thereof are jumped over during the reading out;
c. repeating steps a and b until each message has been received and stored, and compiling the messages from the received parts of the messages.

Finally, the present invention relates to a transceiver comprising a transceiver processor, a transceiver memory controlled by the transceiver processor and for storing a first message set with messages, of which at least some have different transmission priorities, and a transceiver buffer controlled by the transceiver processor, the transceiver buffer comprising a first buffer set with transceiver buffer parts each being assigned to buffer at least part of a message of the first message set with a predetermined transmission priority, the transceiver processor being arranged for carrying out the following functions:
a. subsequently reading out parts of the messages of the first message set from the transceiver memory and subsequently buffering these parts into the transceiver buffer parts of the first buffer set such that any message with a predetermined transmission priority is buffered in a transceiver buffer part having assigned to it an equal predetermined transmission priority;
b. subsequently reading out the transceiver buffer parts of the first buffer set and transmitting the parts of the messages of the first set such that only valid message information is read out from the transceiver buffer parts of the first buffer set and empty transceiver buffer parts or empty parts thereof are jumped over during the reading out;
c. repeating steps a and b until each message of the first message set has been transmitted;
   the transceiver buffer also comprising a second buffer set of transceiver buffer parts, at least as many as there are transceiver buffer parts in the first buffer set and each being assigned to buffer at least part of a message of a second message set with a predetermined transmission priority, the transceiver processor being also arranged for carrying out the following functions in parallel to functions a, b and c:
d. subsequently receiving parts of messages of the second message set and subsequently buffering these parts into the transceiver buffer parts of the second buffer set such that any message of the second message set with a predetermined transmission priority is buffered in a transceiver buffer part of the second buffer set having assigned to it an equal predetermined transmission priority;
e. subsequently reading out the transceiver buffer parts of the second buffer set and storing the parts of the messages of the second message set into the transceiver memory such that only valid message information is read out from the transceiver buffer parts of the second buffer set and empty transceiver buffer parts or empty parts thereof are jumped over during the reading out;
f. repeating steps d and e until each message has been received and stored, and compiling the messages of the second message set from the received parts of the messages of the second message set.

The present invention will be explained in detail with reference to some figures, which are intended to show the principles of the invention and not to limit the scope of the present invention.
Figure 1 shows a system with a transmitter and a receiver with which the method according to the present invention may be carried out;
Figures 2 and 3 show some examples of the transmission of several messages in accordance with the present invention, in which Figure 2 relates to buffer parts of equal size and Figure 3 to buffer parts of different sizes;
Figure 4 shows a preferred arrangement for the buffer parts with different sizes;
Figure 5 shows an example of a transceiver in accordance with the present invention.

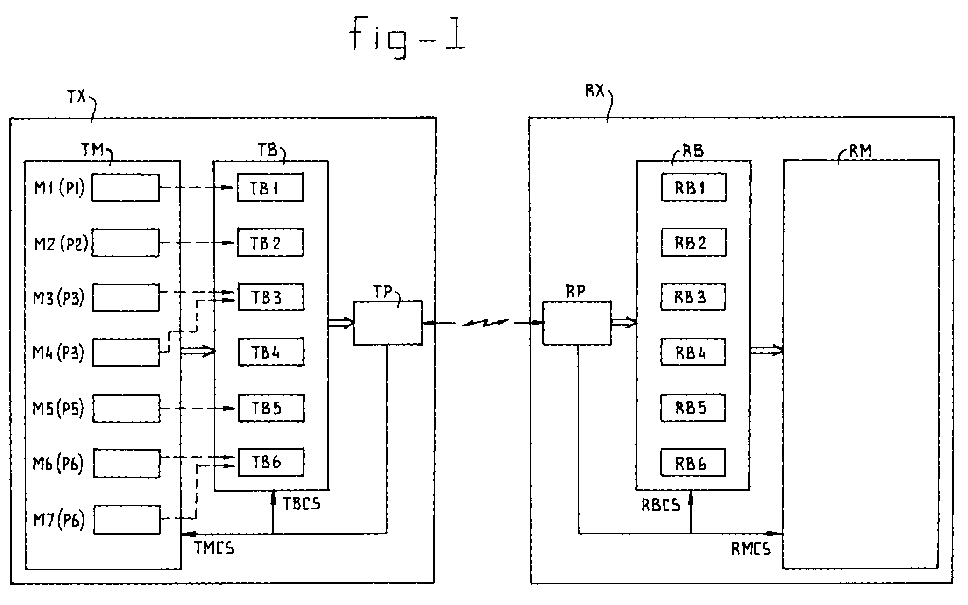

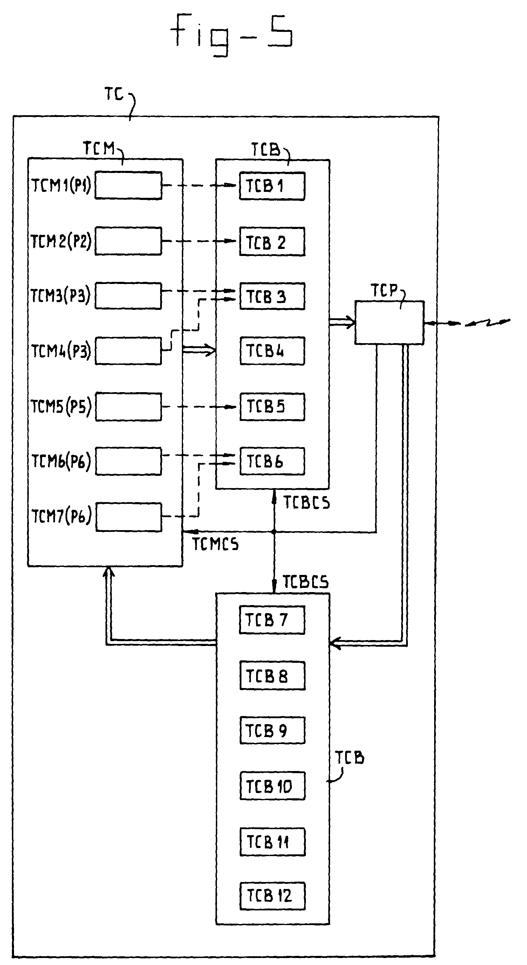

Figure 1 shows a transmitter TX and a receiver RX. The transmitter TX and the receiver RX are able to communicate with one another by any known means of communication. Although the present invention will be illustrated by means of one transmitter and one receiver (or one transceiver as in Figure 5), it is to be understood that the present invention is applicable to communications between any number of transmitters and any number of receivers, be it with single channel or multichannel communications.

The transmitter TX comprises a memory TM and a buffer TB.

The transmitter memory TM stores several messages. In Figure 1 the situation is shown in which the memory TM stores 7 messages M1, ... M7. Of course, any other number of messages can be stored in the transmitter memory TM. Behind any of the messages M1, ... M7, between brackets there is a symbol Pi, where i = 1, ....6. The symbol Pi refers to the transmission priority of the message concerned. The symbol P1 refers e.g. to the highest possible transmission priority, whereas P6 refers to the lowest possible transmission priority. The larger i is in Pi, the lower is the priority of the message concerned.

In accordance with the present invention, the transmitter buffer TB is subdivided in transmission buffer parts TB1, ....TB6. There are at least as many transmission buffer parts TB1, ... TB6 as there are levels of priority. In Figure 1, the situation is shown that there is one transmission buffer part TBi, where i is 1, .... 6, for each level of transmission priority. However, it is emphasized that it is possible to have more than one transmission buffer part TBi for a predetermined priority level Pi.

The transmitter TX furthermore comprises a transmitter processor TP. The transmitter processor TP is connected to both the transmitter memory TM and the transmitter buffer TB. The transmitter processor TP controls the transmitter memory TM by means of a transmitter memory control signal TMCS and the transmitter buffer TB by means of a transmitter buffer control signal TBCS.

The transmitter processor TP controls the data flow from the transmitter memory TM to the transmitter buffer TB and from the transmitter buffer TB to the outside world.

The receiver RX comprises a receiver processor RP, a receiver buffer RB and a receiver memory RM. The receiver processor RP controls the receiver buffer RB with a receiver buffer control signal RBCS and the receiver memory RM by means of a receiver memory control signal RMCS.

The receiver buffer RB comprises a plurality of receiver buffer parts RB1, ... RB6. In order to carry out the method in accordance with the present invention, the receiver buffer parts RB1, ... RB6 need to be at least as many in number as there are transmission buffer parts TB1, ... TB6. Moreover, it is required that for each transmission buffer part TB1, ... TB6 with a predetermined size there is a corresponding receiver buffer part RB1, ... RB6 with at least equal size.

Preferably, the transmitter buffer TB and the receiver buffer RB are sized and arranged equally.

In accordance with the present invention, the messages M1, ... M7 are sliced up in little parts or packets and are transmitted in accordance with prioritizing rules. The invention may be simply implemented by cleverly using a feature which is available in most computer's networking software. Only the slicing in little packets is a task to be done by additional software. Most of the work is left to the network software of the transmitter processor TP. Network software is available which allows for multiple connections across a network to another computer, for instance using the so-called Sockets interface ¹. However, it could also be implemented using different libraries, like XTI/TLI ². Both Sockets and XTI/TLI can support a variety of network protocols, such as TCP/IP, IPX, AppleTalk, etc.
¹ Sockets - see Internetworking with TCP/IP (Third Edition), Vol. 1, Douglas E. Comer, Prentice Hall, ISBN 0-13-216987-8, Chapter 20; also see UNIX^{R} System V Network Programming, Stephen A. Rago, Addison Wesley, ISBN 0-201-563184, Chapter 7.
² XTI/TLI - see UNIX^{R} System V Network Programming, Stephen A. Rago, Addison Wesley, ISBN 0-201-563184, Chapter 4.

Both the Sockets and XTI/TLI interfaces can operate with several types of transport mechanisms between the network devices that use them. First of all there are the connectionless datagrams, which are not guaranteed to arrive. Second and more important here, are the connection-oriented means of transport. In the latter case, the method used is such that one device takes the initiative of opening a connection to another device. This connection exists until it is disconnected in an orderly fashion by either side, or until the connection is broken. Then, the network software will make what is called a "best-effort delivery" data (see Internetworking with TCP/IP (Third Edition), Volume 1, Douglas E. Comer, Sections 13.1 through 13.3) that is sent across it.

Recognition or origin/destination of a data packet, retransmission of lost data packets, and reintegration of data packets is done by the network software. This is considered to be part of the state of the art which need no further explanation here. If e.g. connection-oriented network protocols, like TCP over IP, are used, these functions are taken care of automatically.

The above-mentioned protocols traditionally open just one of these connection-oriented links (or connections) between two computers, and pass one message at a time across them.

In accordance with the invention, instead of opening just one connection, several connections across the network to the destination device are opened, with a minimum of one connection dedicated to each transmission priority level assigned to the messages M1, ... M7. As indicated above, more than one connection per transmission priority level may be opened, e.g. to be able to pass several of the highest priority messages simultaneously.

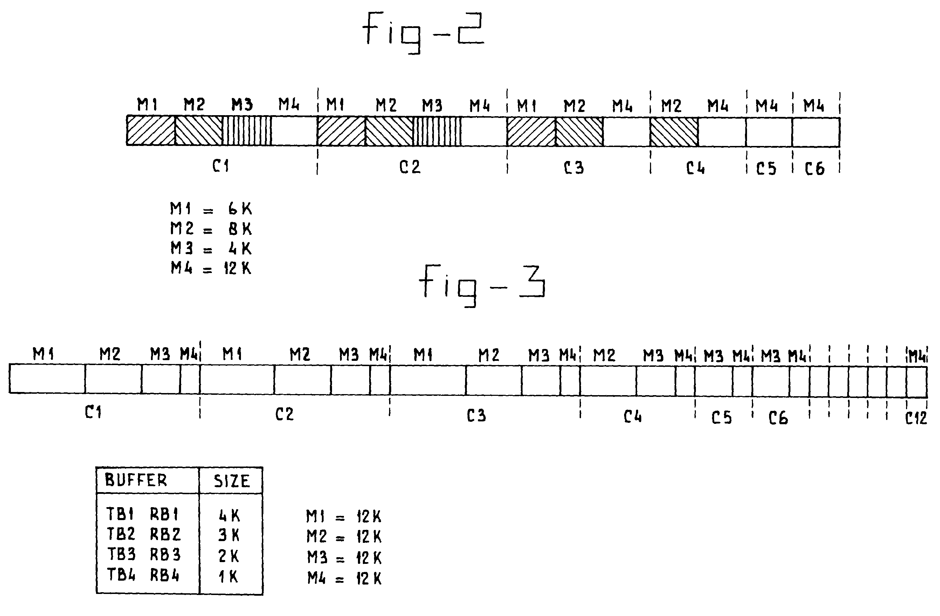

Figure 2 shows an example of opening several connections across the network in order to transmit four messages M1, ... M4. The transmission priority, in the example according to Figure 2, is such that M1 has a higher priority than M2, M2 a higher priority than M3, and M3 a higher priority than M4.

The size of the messages is as follows:
M1 = 6 K
M2 = 8 K
M3 = 4 K
M4 = 12 K

Furthermore, it is assumed that there are four transmission buffer parts TB1 ... TB4, all having a size of 2 K.

For transmitting the content of all messages, M1, ... M4, six transmission cycles C1, ... C6 are necessary as explained below. In a first transmission cycle C1, the transmitter processor TP reads slices of size 2K from any of the messages M1, ... M4 and transfers any of these four slices to transmitter buffer parts TB1, ... TB4 respectively. Then, the transmitter processor TP writes the contents of the transmitter buffer parts TB1, .... TB4 to the connection line to the receiver RX. In this latter step, 2K sliced parts of messages M1, M2, M3, M4, respectively are written subsequently to the connection to the receiver RX, as shown in Figure 2. So the sliced message parts are not sent in parallel, but one after the other in accordance with the level of transmission priority.

After cycle C1, a next cycle C2 is carried out. In cycle C2 the same steps are carried as in cycle C1. Since in cycle C1 none of the messages M1, ... M4 has been transmitted entirely, also cycle C2 comprises four subsequent sliced parts of any of the messages M1, ... M4.

However, at the end of cycle C2 message M3 has been entirely transmitted since its content has the size of 4K. Therefore, in the next cycle C3 the content of transmission buffer part TB3 will be empty and the transmitter processor TP will detect that as soon as it tries to write the content of transmitter buffer part TB3 to the connection. Then, the transmitter processor TP directly jumps to transmitter buffer part TB4 and writes a slice of 2K of message M4 after the slice of 2K of message M2 to the connection, as is clearly shown in Figure 2.

Similarly, in cycle C4 no slices of message M1 need be transmitted anymore, since transmission of message M1 has already been completed in cycle C3.

Similarly, in cycles C5 and C6 only two slices of 2K of message M4 need be transmitted to the receiver RX.

At the receiver side, the receiver processor RP reads the subsequent slices of 2K from the connection to the transmitter TX, and writes them into subsequent receiver buffer parts RB1, ... RB4. Of course, arrangements will have to be made to indicate the beginning and ending of messages in order for the receiver RX to know in which receiving buffer part to buffer a received slice of data. Moreover, these beginning and ending indications of the messages are needed to compile the entire original messages M1, ... M4 after the completion of the transmissions. This compiling is carried out by the receiver processor RP when writing the contents of the respective receiver buffer parts RB1, .... RB4 into its memory RM.

It is to be noted that because of the jumping over empty transmitter buffer parts, or over empty portions thereof, the proposed transmission scheme differs from a normal time multiplexing scheme, in which an empty transmitter buffer part would still occupy a time period during the transmission.

The method as explained above with reference to Figure 2 allows the simultaneous sending of messages of different priorities to one destination computer (or receiver) simultaneously. The method according to the invention guarantees that a message with high priority need not wait for a very large message with low priority to be transmitted entirely.

As may be evident for a person skilled in the art, the method according to the invention can be generalized for multiple destination networked devices by expanding the cycle to encompass more connections. Even multiple connections of the same priority to a receiving device are possible.

In the transmission scheme in accordance with Figure 2, all transmission priorities get an equal share of the resources. In Figure 3, an embodiment of the invention is shown in which the higher the transmission priority, the larger the share of resources is. In the embodiment according to Figure 3, the transmitter buffer parts TB1 ... TB4 have different sizes. In the example according to Figure 3, the sizes are as follows: TB1 = 4 K, TB2 = 3 K, TB3 = 2 K, and TB4 = 1 K.

Moreover, the sizes of the receiver buffer parts RB1, ... RB4 are equal to those of the transmitter buffer parts TB1 ... TB4, respectively.

Moreover, in the embodiment according to Figure 3 it is assumed that there are four messages M1 ... M4 having all a size of 12 K. However, again the messages have decreasing levels of transmission priority, like in the embodiment of Figure 2.

Following the same method as explained with reference to Figure 2, Figure 3 shows that the method according to the embodiment of Figure 3 guarantees that message M1 is transmitted much faster than M2, etc. The size of the respective transmitter buffer parts TB1, ... TB4 and the corresponding receiver buffer parts RB1 ... RB4, is decisive for the speed of transmission of the respective message.

It is observed that most of the network layer endpoints, like Sockets or otherwise, can be given a buffer for their operations. Such a buffer allows the endpoint to send or receive a predetermined amount of bytes before it has to wait until it is able to continue working. Thus, the transmission scheme proposed in Figure 3 can be easily implemented by setting the appropriate parameters in existing network layer endpoints.

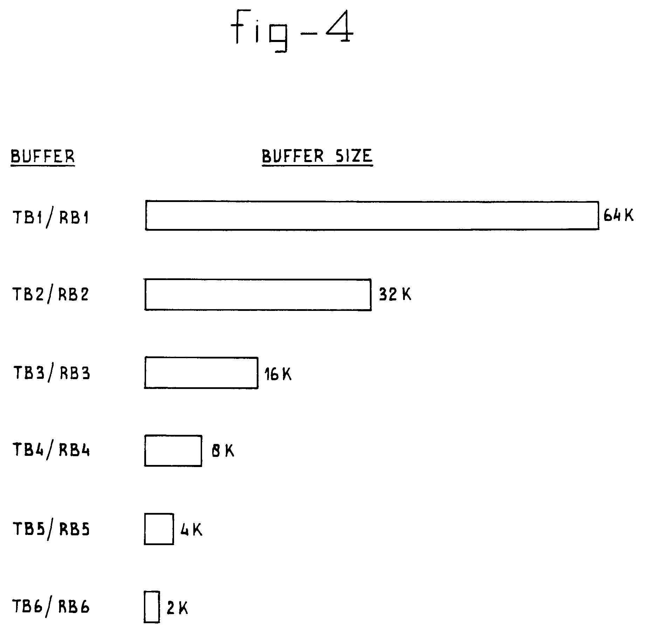

Figure 4 shows a preferred arrangement for the respective buffer sizes of the transmitter buffer parts TB1 ... TB6, and the receiver buffer parts RB1, ... RB6. In the embodiment according to Figure 4, the lowest transmission priority gets a predetermined buffer part size of 2K. The next buffer part size is twice as large, i.e. 4K. Any next higher transmission priority similarly gets twice as much buffer size. Thus, using 6 transmission priorities, in the example of Figure 4, the largest buffer size is 64 K. This guarantees that in one cycle a message with a certain transmission priority can theoretically pass twice as much data as a message with the next lower transmission priority. Note that the word "theoretically" applies because the message themselves may be smaller than the assigned buffer parts.

The setting of the buffer parts in the exponential way as shown in Figure 4, also guarantees that any priority level uses just a little more bandwidth than the total sum of bandwidths of any of the lower priorities.

As may be evident to a person skilled in the art, the buffer part sizes shown in Figures 2, 3, and 4 are given by way of example only and are not intended to limit the scope of the present invention.

Figure 5 shows that the present invention can also be carried out by a transceiver TC. The transceiver according to Figure 5 comprises a transceiver processor TCP, a transceiver memory TCM connected to the transceiver processor TCP, and a transceiver buffer TCB also connected to the transceiver processor TCP. The transceiver buffer TCB is schematically indicated to be divided into two portions, the first one having transceiver buffer parts TCB1, .... TCB6, whereas the second portion comprises transceiver buffer parts TCB7, .... TCB12.

The transceiver memory TCM is indicated to store 7 messages TCM1 (P1), .... TCM7 (P6). The symbol Pi has been explained above with reference to Figure 1.

The transceiver TC shown in Figure 5 operates in a way to combine the functions of the transmitter TX and the receiver RX of Figure 1 simultaneously. In other words, the transceiver processor TCP is arranged for carrying out the same functions as the transmitter TX of Figure 1 when transmitting the messages TCM1, .... TCM7 through the transceiver buffer TCB to a predetermined destination. Moreover, when receiving messages from another destination, the transceiver processor TCP will subsequently write them into its memory TCM through the transceiver buffer parts TCB7, ... TCB12, in the same way as the receiver RX of Figure 1 receives and stores received messages.

The transceiver processor TCP controls the transceiver memory TCM, the transceiver buffer parts TCB1, ... TCB12, by means of a transceiver memory control signal TCMC6 and a transceiver buffer control signal TCBC6 respectively. Moreover, the transceiver processor TC8 is arranged to compile original messages after having received subsequent portions thereof as explained above with reference to the receiver RX (Fig. 1).

## Claims

1. A method of transmitting a plurality of messages (M1, ..., M7), of which at least some have different transmission priorities (P1, ..., P6), between at least one transmitter (TX) and at least one receiver (RX), said transmitter (TX) at least comprising a transmitter processor (TP), a transmitter memory (TM) and a transmitter buffer (TB), said transmitter buffer (TB) comprising a plurality of transmitter buffer parts (TB1, ..., TB6) each being assigned to buffer at least part of a message with a predetermined transmission priority, said method comprising the following steps:
a. subsequently reading out parts of the messages (M1, ..., M7) and subsequently buffering these parts into said transmitter buffer parts such that any message with a predetermined transmission priority is buffered in a transmitter buffer part having assigned to it an equal predetermined transmission priority;
b. subsequently reading out said transmitter buffer parts (TB1, ..., TB6) and transmitting said parts of said messages (M1, ..., M7) such that only valid message information is read out from said transmitter buffer parts and empty transmitter buffer parts or empty parts thereof are jumped over during said reading out;
c. repeating steps a and b until each message has been transmitted.

2. Method according to claim 1 wherein the higher is the transmission priority of the message to be transmitted the larger is the part of the message buffered in the corresponding transmitter buffer part.

3. Method according to claim 2 wherein the size of the part of a message having a predetermined transmission priority and being buffered in a corresponding transmitter buffer part is as twice as large as the size of the part of another message having one lower level of transmission priority and being buffered in another corresponding transmitter buffer part.

4. Method according to any of the preceding claims wherein more than one transmission buffer part is provided for messages of at least one of the transmission priorities.

5. Transmitter comprising a transmitter processor (TP), a transmitter memory (TM) controlled by said transmitter processor and for storing a plurality of messages (M1, ..., M7), of which at least some have different transmission priorities (P1, ..., P6), and a transmitter buffer (TB) controlled by said transmitter processor, said transmitter buffer (TB) comprising a plurality of transmitter buffer parts (TB1, ..., TB6) each being assigned to buffer at least part of a message with a predetermined transmission priority, said transmitter processor being arranged for:
a. subsequently reading out parts of the messages (M1, ..., M7) from the transmitter memory (TM) and subsequently buffering these parts into said transmitter buffer parts (TB1, ..., TB6) such that any message with a predetermined transmission priority is buffered in a transmitter buffer part having assigned to it an equal predetermined transmission priority;
b. subsequently reading out said transmitter buffer parts (TB1, ..., TB6) and transmitting said parts of said messages (M1, ..., M7) such that only valid message information is read out from said transmitter buffer parts and empty transmitter buffer parts or empty parts thereof are jumped over during said reading out;
c. repeating steps a and b until each message has been transmitted.

6. Transmitter according to claim 5 wherein the higher is the transmission priority the larger is the transmitter buffer part corresponding to said transmission priority.

7. Transmitter according to claim 6 wherein the size of a transmitter buffer part having a predetermined transmission priority is as twice as large as the size of another transmitter buffer part having one lower level of transmission priority.

8. Transmitter according to any of the claims 5 through 7 wherein said transmission buffer (TB) comprises more than one transmission buffer part for messages of at least one of the transmission priorities.

9. System provided with at least one transmitter according to any of the claims 5 through 8 and with at least one receiver (RX), comprising a receiver processor (RP), a receiver memory (RM) controlled by said receiver processor and for storing a plurality of messages (M1, ..., M7), of which at least some have different transmission priorities (P1, ..., P6), and a receiver buffer (RB) controlled by said receiver processor, said receiver buffer (RB) comprising a plurality of receiver buffer parts (RB1, ..., RB6), at least as many as there are transmitter buffer parts (TB1, ..., TB6) and each being assigned to buffer at least part of a message with a predetermined transmission priority, said receiver processor (RP) being arranged for:
a. subsequently receiving parts of the messages (M1, ..., M7) from said transmitter and subsequently buffering these parts into said receiver buffer parts (RB1 , ..., RB6) such that any message with a predetermined transmission priority is buffered in a receiver buffer part having assigned to it an equal predetermined transmission priority;
b. subsequently reading out said receiver buffer parts (RB1, ..., RB6) and storing said parts of said messages (M1, ..., M7) into said receiver memory (RM) such that only valid message information is read out from said receiver buffer parts and empty receiver buffer parts or empty parts thereof are jumped over during said reading out;
c. repeating steps a and b until each message has been received and stored, and compiling said messages from said received parts of said messages.

10. A transceiver (TC) comprising a transceiver processor (TCP), a transceiver memory (TCM) controlled by said transceiver processor and for storing a first message set with messages (M1, ..., M7), of which at least some have different transmission priorities (P1, ..., P6), and a transceiver buffer (TCB) controlled by said transceiver processor, said transceiver buffer (TCB) comprising a first buffer set with transceiver buffer parts (TCB1, ..., TCB6) each being assigned to buffer at least part of a message of said first message set with a predetermined transmission priority, said transceiver processor (TP) being arranged for carrying out the following functions:
a. subsequently reading out parts of the messages (M1, ..., M7) of the first message set from the transceiver memory (TCM) and subsequently buffering these parts into said transceiver buffer parts (TCB1, ..., TCB6) of said first buffer set such that any message with a predetermined transmission priority is buffered in a transceiver buffer part having assigned to it an equal predetermined transmission priority;
b. subsequently reading out said transceiver buffer parts (TCB1, ..., TCB6) of said first buffer set and transmitting said parts of said messages (M1, ..., M7) of the first set such that only valid message information is read out from said transceiver buffer parts of said first buffer set and empty transceiver buffer parts or empty parts thereof are jumped over during said reading out;
c. repeating steps a and b until each message of the first message set has been transmitted;
said transceiver buffer (TCB) also comprising a second buffer set of transceiver buffer parts (TCB7, ..., TCB12), at least as many as there are transceiver buffer parts in the first buffer set (TCB1, ..., TCB6) and each being assigned to buffer at least part of a message of a second message set with a predetermined transmission priority, said transceiver processor (TCP) being also arranged for carrying out the following functions in parallel to functions a, b and c:
d. subsequently receiving parts of messages of the second message set and subsequently buffering these parts into said transceiver buffer parts (TCB7, ..., TCB12) of said second buffer set such that any message of said second message set with a predetermined transmission priority is buffered in a transceiver buffer part of said second buffer set having assigned to it an equal predetermined transmission priority;
e. subsequently reading out said transceiver buffer parts (TCB7, ..., TCB12) of said second buffer set and storing said parts of said messages (M1, ..., M7) of said second message set into said transceiver memory (TCM) such that only valid message information is read out from said transceiver buffer parts of said second buffer set and empty transceiver buffer parts or empty parts thereof are jumped over during said reading out;
f. repeating steps d and e until each message has been received and stored, and compiling said messages of said second message set from said received parts of said messages of said second message set.
